# EUROPÄISCHE PATENTSCHRIFT

(11) **EP 0 712 469 B1**
(45) Veröffentlichungstag und Bekanntmachung des Hinweises auf die Patenterteilung: **18.12.2002**
(21) Anmeldenummer: 95917881.5
(22) Anmeldetag: 23.05.1995
(51) Int. Cl.: F16C 13/00, B02C 4/00

(54) **WALZE**
ROLLER
CYLINDRE

(30) Priorität: 06.06.1994 CH 177394
(43) Veröffentlichungstag der Anmeldung: 22.05.1996
(73) Patentinhaber: BÜHLER AG, 9240 Uzwil (CH)
(72) Erfinder: HIRSCHBERG, Sebastian, CH-8404 Winterthur (CH); GEIGER, Armin, CH-9242 Bichwil (CH)
(74) Vertreter: Frommhold, Joachim, Dr.
(86) Internationale Anmeldenummer: CH9500115
(87) Internationale Veröffentlichungsnummer: WO95033932

(56) Entgegenhaltungen:
- DE-A- 4 205 167
- FR-A- 2 153 871
- FR-A- 2 203 701
- FR-A- 2 349 762

## Beschreibung

Die Erfindung betrifft eine Mahlwalze, insbesondere zum Mahlen oder Desagglomerieren von unterschiedlichen Materialien, wie z.B. körnigem Schüttgut, Farben u.dgl. gemäss Anspruch 1.

Sie ist überall dort anwendbar, wo Mahlwalzendeformationen im Betriebszustand d.h. während der Mahlens, in Verbindung mit dem Walzenspalt ein Problem darstellen.

In Walzenmühlen angeordnete Walzen werden je nach Funktion entweder mit einem definierten Abstand parallel zueinander angeordnet (Mahlspalt) oder sie werden praktisch spaltfrei gegeneinander gepresst. Hierbei unterliegen sie im Betrieb sowohl einem Verschleiss als auch einer gewissen Durchbiegung, was zu Abweichungen von definierten Betriebsvorgaben führt. Wird eine Walze, die an ihren Walzenenden gelagert ist, gegen eine zweite, gleichartig gelagerte Walze gepresst, biegen sich die Walzen durch. Die Durchbiegung ist in der Mitte stärker als an den gelagerten Enden.

Die US-A-4,823,689 zeigt eine Walze mit einem Walzenmantel und einem Kern, zwischen welchen Teilen sich in Achsrichtung erstreckende blattfederartige Verbindungen vorgesehen sind. Kern, Walzenmantel und Federelemente bestehen aus demselben Material. Der Walzenmantel ist allerdings relativ weich und sinkt an der Druckstelle mit der Gegenwalze ein. Eine solche Walze soll in kopier-, Druch- und Faxgeräten Anwendung finden.

Die FR-A-2203701 offenbart lange und schlanke Walzen von Kalandern zum Auswalzen von plastischen Werkstoffen zu Folienbahnen. Diese Walze mit Durchbiegungsausgleich besteht aus einem Walzenkern und einem konzentrisch dazu angeordneten Walzenmantel, der durch in gleichmässigen Abständen durch den Walzenkern angeordnete federnde Elemente mit unterschiedlicher Federsteife abgestützt ist, wobei die Federelemente aus Metallrohren bestehen, deren Innendurchmesser von beiden Ballenkanten der Walze zur Walzenmitte hin, bei gleichbleibendem Aussendurchmesser abnehmend ausgebildet sind. Zudem sind Walzenkern und Walzenmantel in der Mitte starr verbunden.

Diese Walzen stellt einen Spezialfall dar, wobei die Federelemente unterschiedliche Federsteifen aufweisen und technisch aufwendig sind. Ein solcher Durchbiegungsausgleich ist technisch nur schwer realisierbar. Eine solche Konstruktion ist für Zerkleinerungs- bzw. Vermahlungsvorgänge nicht einsetzbar.

Allgemein bekannt ist auch die Verwendung bombierter Walzen, deren Bombierung für einen bestimmten Druck berechnet ist und der Walze unter Durchbiegung eine Linienberührung mit der Gegenwalze verleiht, wenn dieser Druck aufgebracht wird. Während des Betriebs erforderlichen Veränderungen des Druckes wird eine solche Bombierung nicht gerecht.

Der Erfindung liegt nun die Aufgabe zugrunde, eine Mahlwalze so weiterzubilden, dass sich eine Linienberührung mit einer Gegenwalze unter Druck auch dann ergibt, wenn sich der Druck verändern sollte.

Diese Aufgabe wird durch die erfindungsgemässe Mahlwalze des Anspruchs 1 gelöst.

Erfindungsgemäss enthält die Mahlwalze einen Kern mit Zweipunktlagerung an den Enden, zwischen dem Kern und einem verschleissfesten Mantel sind elastische Elemente angeordnet. Der Mantel wird durch diese elastischen Elemente abgestützt. Die elastischen Elemente besteher aus einzelnen, an sich bekannten elastomeren Federelemten in Form von Längsrippen, die auch in Form einer durchgehenden oder unterbrochenen, elastischen Schicht ausgebildet sein können. Der Federweg der elastischen Elemente muss grösser sein als die Durchbiegung des Walzenkerns.

Ebenfalls richtet sich bei Anwendung einzelner Federelemente die Grösse des Spaltes zwischen Kern und Mantel nach der Grösse der Durchbiegung, wobei die Spaltgrösse grösser als diese sein muss. In die Bestimmung der Spaltgrösse ist ggf. auch die ortsfeste Lagerung solcher Federelemente mit einzubeziehen.

Möglich ist der Einsatz von Federelementen unterschiedlicher Steifigkeit, was die Durchbiegung nahezu eliminieren lässt.

Die erfindungsgemässe Lösung gestattet es dann auch, längere Walzen mit geringer Durchbiegung herzustellen, bzw. Walzenstühle mit längeren und funktionsfähigen Walzen bzgl. Deformation/Biegeausgleich kostengünstiger zu fertigen. Zudem kann bei eventueller Beschädigung des Walzenmantels dieser leicht ausgewechselt werden.

Ebenso kann der Spalt zur Kühlung in verschiedenster und an sich bekannter Form genutzt werden. Wird z. B. eine Spiralkühlung mit Kühlmitteleinleitung auf der einen Stirnseite (mit dem "kleineren" Radius) und Ableitung des Kühlmittels auf der anderen Stirnseite verwendet, so stören zwecks Erreichung eines konstanten Mahlspaltes selbst Temperaturdehnungen, die eine konische Deformation der Walze bewirken, nicht, solange die Abweichung vom Zylinder deutlich kleiner als die Durchbiegung des Walzenmantels ist. Der Walzenmantel muss lediglich linear sein.

Die geringere Wärmekapazität des Walzenmantels erweist sich regelungstechnisch als günstig.

Ein konstanter Mahlspalt ist mit der erfindungsgemässen Walze bei unterschiedlichen Betriebspunkten, z. B. beim Anfahren möglich.

Eine bei Mahlwalzen (Glattwalzen) bisher übliche Bombierung kann entfallen.

Eine solche Walzenausbildung ermöglicht variierbare Einstellungen bei nichtkonstanter Last aber auch bei konstanter, hoher Last.

Zwar ist es auch bekannt, elastische Zwischen- oder Deckschichten bei Walzen von Druckmaschinen einzusetzen, diese sind jedoch nur für wesentlich geringere Kräfte und Drücke einsetzbar. Eine einfache Übertragung derartiger Lösungen z. B. auf Glattwalzen von Ausmahlpassagen eines Walzenstuhles oder eines Farbwalzwerkes ist nicht gegeben.

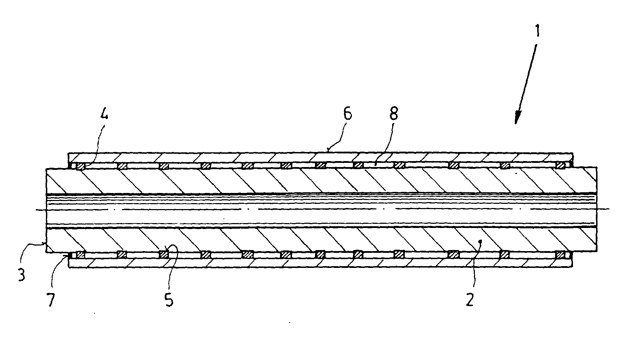

Die Erfindung soll nachfolgend in einem Ausführungsbeispiel an Hand einer Zeichnung näher beschrieben werden. Die Zeichnung zeigt eine erfindungsgemässe Walze in einer Prinzipdarstellung.

Eine Glattwalze 1 von einem Meter Länge für einen Walzenstuhl (Ausmahlpassage) besteht aus einem Kern 2 in Form eines dickwandigen Rohres aus üblichem Stahlguss. Die Wandstärke ist ausreichend für die Bearbeitung der Lagerstummel 3. Die Oberfläche ist lediglich überdreht. Auf der Oberfläche sind im Abstand von ca. 100 mm handelsübliche Federelemente 4 aus Elastomer gleicher Federsteife angeordnet, die in Führungen 5 unter Beachtung ihrer Werkstoffeigenschaften aufgenommen sind. Der Aussendurchmesser der Federelemente 4 ist so gewählt, dass ein Spalt 8 von ca. 10 mm zwischen dem Kern 2 und einem Walzenmantel 6 aus Hartguss entsteht. Dieser Walzenmantel 6 ist auf dem Aussendurchmesser zylindrisch geschliffen und innenseitig wiederum nur überdreht.

Da bei einer Grenzbelastung von 50 N/mm Walzenlänge die Exzentrizität der Walze 1 weniger als 1 mm beträgt, kann der Spalt 8 auch bis auf eben diese Grösse verringert werden. Der Spalt 8 ist seitlich, d. h. an den Walzenstirnseiten mit üblichen Dichtelementen 7 abgedichtet.

In einer abgewandelten Form können die Längsrippen unterbrochen, vorgespannt sein und z.B. aus Polyurethan bestehen und auf den Kern 2 aufgeklebt oder gegossen werden. An den Enden der Walze 1 sind wiederum Dichtelemente 7 angeordnet. Die Anordnung unterbrochener Längsrippen gestattet neben der Drehmomentübertragung und günstigen Herstellbarkeit auch einen optimalen Kühlmittelkreislauf, sofern erforderlich.

Die erfindungsgemässe Walze 1, die nicht auf die dargelegte Ausführungsform begrenzt ist, gestattet bei vergleichsweise niedrigen Herstellungs- und Betriebskosten eine hohe Funktionalität, insbesondere einen über viele Betriebsstunden konstanten Mahlspalt in Verbindung mit einer Kühlmöglichkeit. Die funktionellen Vorteile beim gleichmässigen Vermahlen oder Zerkleinern von Mahlgut äussern sich in einer längeren Betriebsdauer und/oder höheren Variabilität der Betriebsparameter. Des weiteren ist es z.B. bei Farbwalzwerken so möglich, für unterschiedliche Farbpigmente mit nur einem Walzentyp zu arbeiten.

### Bezugszeichen

- 1: Walze
- 2: Kern
- 3: Lagerstummel
- 4: Federelement
- 5: Führung
- 6: Walzenmantel
- 7: Dichtelement
- 8: Spalt

## Patentansprüche

1. Mahlwalze zum Ausgleich von Walzendeformationen und Durchbiegungen wobei
- die Mahlwalze (1) aus einem zylindrischen Kern (2) und einem rohrförmigen Walzenmantel (6) besteht;
- zwischen dem Kern (2) und dem Walzenmantel (6) elastische Elemente angeordnet sind und somit ein Spalt (8) zwischen dem Kern (2) und dem Walzenmantel (6) gebildet ist;
- die elastischen Elemente als voneinander beabstandete Federelemente in Form von Längsrippen aus Elastomer angeordnet sind;
- der Federweg der elastischen Elemente grösser ist als die Durchbiegung des Walzenkerns; und
- die Spaltgrösse zwischen dem Kern und dem Walzenmantel grösser ist als die Durchbiegung des Walzenkerns.

2. Walze nach einem der vorhergehenden Ansprüche, **dadurch gekennzeichnet, dass** der Spalt (8) zwischen dem Kern (2) und dem Walzenmantel (6) die Grösse der maximalen Durchbiegung des Walzenkerns (2) aufweist.

3. Walze nach einem der vorhergehenden Ansprüche, **dadurch gekennzeichnet, dass** der Walzenmantel (6) zylindrisch ist.

4. Walze nach einem der vorhergehenden Ansprüche, **dadurch gekennzeichnet, dass** der Walzenmantel (6) konisch ist.

5. Walze nach einem der vorhergehenden Ansprüche, **dadurch gekennzeichnet, dass** die Längsrippen (4) als eine durchbrochene bzw. unterbrochene elastische Schicht ausgebildet sind.

## Claims

1. A milling roller for compensating roller deformations and deflections,
- the milling roller (1) comprising a cylindrical core (2) and a tubular roller sleeve (6);
- elastic elements being positioned between the core (2) and the roller sleeve (6) and therefore a gap (8) being formed between the core (2) and the roller sleeve (6);
- the elastic elements being arranged as spring elements at intervals from one another in the form of lengthwise ribs made of elastomer;
- the range of spring of the elastic elements being greater than the deflection of the roller core; and
- the gap magnitude between the core and the roller gap being greater than the deflection of the roller core.

2. The roller according to one of the preceding claims, **characterized in that** the gap (8) between the core (2) and the roller sleeve (6) has the magnitude of the maximum deflection of the roller core (2).

3. The roller according to one of the preceding claims, **characterized in that** the roller sleeve (6) is cylindrical.

4. The roller according to one of the preceding claims, **characterized in that** the roller sleeve (6) is conical.

5. The roller according to one of the preceding claims, **characterized in that** the lengthwise ribs (4) are implemented as an interrupted or uninterrupted elastic layer.

## Revendications

1. Cylindre de mouture pour la compensation de déformations et de courbures du cylindre,
- le cylindre de mouture (1) consistant en un noyau cylindrique (2) et une chemise de cylindre tubulaire (6) ;
- des éléments élastiques étant disposés entre le noyau (2) et la chemise de cylindre (6) et un intervalle (8) étant ainsi formé entre le noyau (2) et la chemise du cylindre (6) ;
- les éléments élastiques étant disposés en tant qu'éléments à ressort écartés les uns des autres sous forme de rainures longitudinales en élastomère ;
- la course de ressort des éléments élastiques étant supérieure à la courbure du noyau du cylindre ; et
- la dimension de l'intervalle entre le noyau et la chemise du cylindre étant supérieure à la courbure du noyau du cylindre.

2. Cylindre selon une des revendications précédentes, **caractérisé en ce que** l'intervalle (8) entre le noyau (2) et la chemise du cylindre (6) présente la dimension de la courbure maximale du noyau du cylindre (2).

3. Cylindre selon une des revendications précédentes, **caractérisé en ce que** la chemise du cylindre (6) est cylindrique.

4. Cylindre selon une des revendications précédentes, **caractérisé en ce que** la chemise du cylindre (6) est conique.

5. Cylindre selon une des revendications précédentes, **caractérisé en ce que** les nervures longitudinales (4) sont conçues sous forme d'une couche élastique percée ou interrompue.
